# EUROPEAN PATENT APPLICATION

(11) **EP 4 797 625 A2**
(43) Date of publication of application: **26.08.2026**
(21) Application number: 26190919.6
(22) Date of filing: 21.05.2021
(51) Int. Cl.: H04L 12/18

(54) **METHOD OF MULTIMEDIA BROADCAST/MULTICAST SERVICE (MBMS) DELIVERY MODE SWITCH**

(30) Priority: 21.05.2020 US 202063028231 P
(62) Document number(s) of the earlier application(s) in accordance with Art. 76 EPC: 21733613.0 / 4 154 471
(71) Applicant: InterDigital Patent Holdings, Inc., Wilmington, DE 19809 (US)
(72) Inventor: SHI, Xiaoyan, Westmount, QC H3Z 1T1 (CA); AHMAD, Saad, Montreal, QC H3A 3G4 (CA); OLVERA-HERNANDEZ, Ulises, Montreal, QC H3A 3G4 (CA)
(74) Representative: AWA Sweden AB

(57) **Abstract**

Delivery mode switching between unicast and multicast/broadcast is described. A WTRU may move from a RAN node that supports multimedia broadcast/multicast service (MBMS) session to one that does not support MBMS session, or vice versa. In order to avoid duplicated packet transmission, the unicast delivery mode may be deactivated when the WTRU decides to use multicast/broadcast session. When the multicast/broadcast session is not available, the WTRU may re-activate the unicast delivery mode for MBMS. For example, the PDU session for unicast delivery mode deactivation may be released and the PDU session for unicast delivery mode reactivation may be re-established. Such activity may necessitate additional signaling between WTRU and the network for PDU session establishment/release and all other services running in the PDU session may be interrupted.

## Description

### CROSS REFERENCE TO RELATED APPLICATIONS

This application claims the benefit of U.S. Provisional Application No. 63/028,231, filed May 21, 2020, which is incorporated by reference as if fully set forth.

### BACKGROUND

Multimedia broadcast/multicast service (MBMS) is a point-to-multipoint service in which data is transmitted from a single source entity to multiple recipients. Transmitting the same data to multiple recipients allows network resources to be shared.

### SUMMARY

Delivery mode switching between unicast and multicast/broadcast is described. A wireless transmit/receive unit (WTRU) may move from a RAN node that supports MBMS sessions to one that does not support MBMS sessions, or vice versa. In order to avoid duplicated packet transmission, the unicast delivery mode may be deactivated when the WTRU decides to use multicast/broadcast session. When the multicast/broadcast session is not available, the WTRU may re-activate the unicast delivery mode for MBMS. For example, the PDU session for unicast delivery mode deactivation may be released and the PDU session for unicast delivery mode reactivation may be re-established. Such activity may necessitate additional signaling between WTRU and the network for PDU session establishment/release and all other services running in the PDU session may be interrupted.

### BRIEF DESCRIPTION OF THE DRAWINGS

A more detailed understanding may be had from the following description, given by way of example in conjunction with the accompanying drawings, wherein like reference numerals in the figures indicate like elements, and wherein:
FIG. 1A is a system diagram illustrating an example communications system in which one or more disclosed embodiments may be implemented;
FIG. 1B is a system diagram illustrating an example wireless transmit/receive unit (WTRU) that may be used within the communications system illustrated in FIG. 1A according to an embodiment;
FIG. 1C is a system diagram illustrating an example radio access network (RAN) and an example core network (CN) that may be used within the communications system illustrated in FIG. 1A according to an embodiment;
FIG. 1D is a system diagram illustrating a further example RAN and a further example CN that may be used within the communications system illustrated in FIG. 1A according to an embodiment;
FIG. 2 illustrates a MBMS architecture;
FIG. 3 illustrates a signal diagram establishing a broadcast session;
FIG. 4 illustrates a signal diagram establishing a multicast session;
FIG. 5 illustrates a signal diagram for a unicast delivery mode for MBMS;
FIG. 6 illustrates a signal diagram for the WTRU-initiated PDU session suspending procedure;
FIG. 7 illustrates a signal diagram for the WTRU-initiated PDU session resuming procedure; and
FIG. 8 illustrates a signal diagram for the network-initiated suspending/resuming of unicast delivery mode.

### DETAILED DESCRIPTION

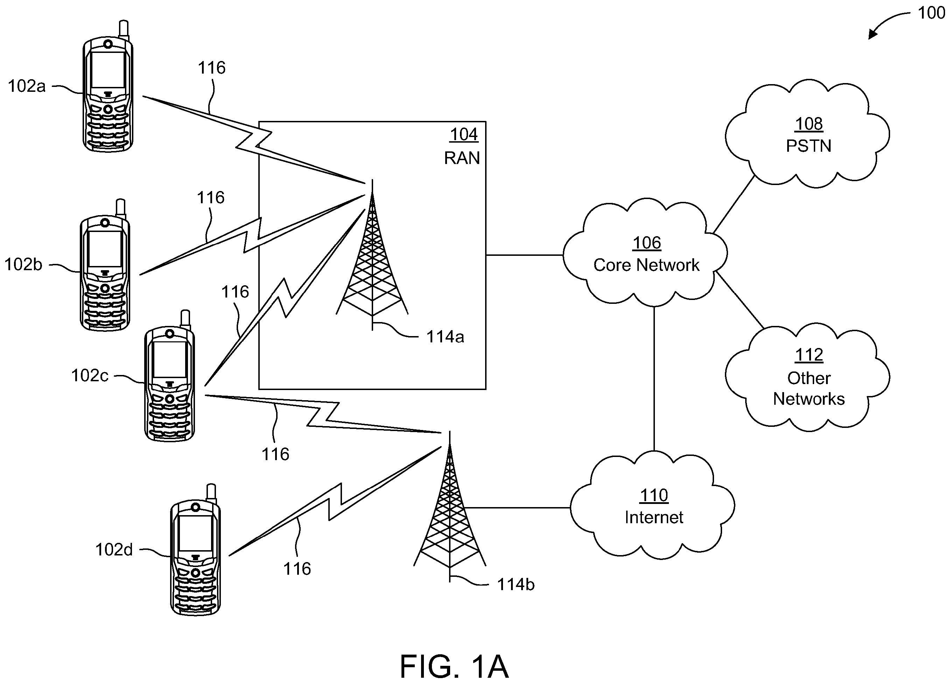

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word discrete Fourier transform Spread OFDM (ZT-UW-DFT-S-OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a radio access network (RAN) 104, a core network (CN) 106, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a station (STA), may be configured to transmit and/or receive wireless signals and may include a user equipment (WTRU), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a WTRU.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106, the Internet 110, and/or the other networks 112. By way of example, the base stations 114a, 114b may be a base transceiver station (BTS), a NodeB, an eNode B (eNB), a Home Node B, a Home eNode B, a next generation NodeB, such as a gNode B (gNB), a new radio (NR) NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104, which may also include other base stations and/or network elements (not shown), such as a base station controller (BSC), a radio network controller (RNC), relay nodes, and the like. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed Uplink (UL) Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access, which may establish the air interface 116 using NR.

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106.

The RAN 104 may be in communication with the CN 106, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104 and/or the CN 106 may be in direct or indirect communication with other RANs that employ the same RAT as the RAN 104 or a different RAT. For example, in addition to being connected to the RAN 104, which may be utilizing a NR radio technology, the CN 106 may also be in communication with another RAN (not shown) employing a GSM, UMTS, CDMA 2000, WiMAX, E-UTRA, or WiFi radio technology.

The CN 106 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

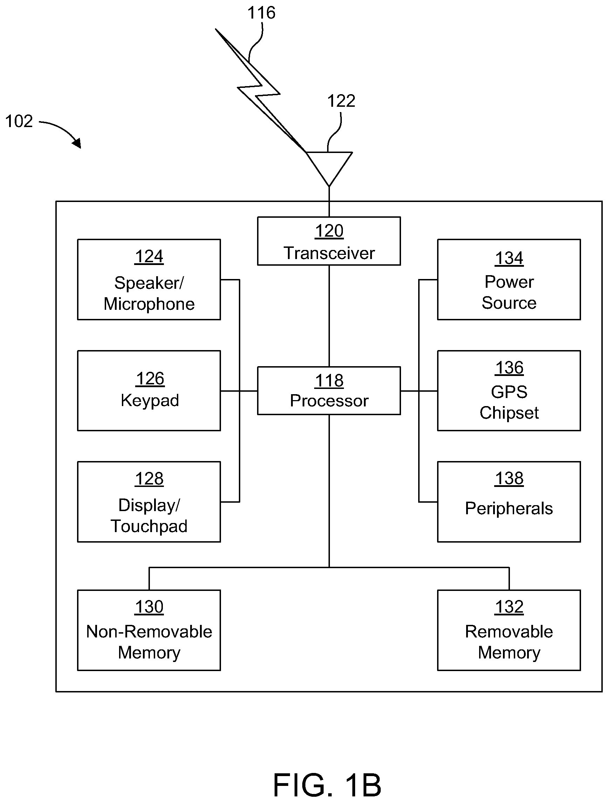

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any subcombination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs), any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors. The sensors may be one or more of a gyroscope, an accelerometer, a hall effect sensor, a magnetometer, an orientation sensor, a proximity sensor, a temperature sensor, a time sensor; a geolocation sensor, an altimeter, a light sensor, a touch sensor, a magnetometer, a barometer, a gesture sensor, a biometric sensor, a humidity sensor and the like.

The WTRU 102 may include a full duplex radio for which transmission and reception of some or all of the signals (e.g., associated with particular subframes for both the UL (e.g., for transmission) and DL (e.g., for reception) may be concurrent and/or simultaneous. The full duplex radio may include an interference management unit to reduce and or substantially eliminate selfinterference via either hardware (e.g., a choke) or signal processing via a processor (e.g., a separate processor (not shown) or via processor 118). In an embodiment, the WTRU 102 may include a half-duplex radio for which transmission and reception of some or all of the signals (e.g., associated with particular subframes for either the UL (e.g., for transmission) or the DL (e.g., for reception)).

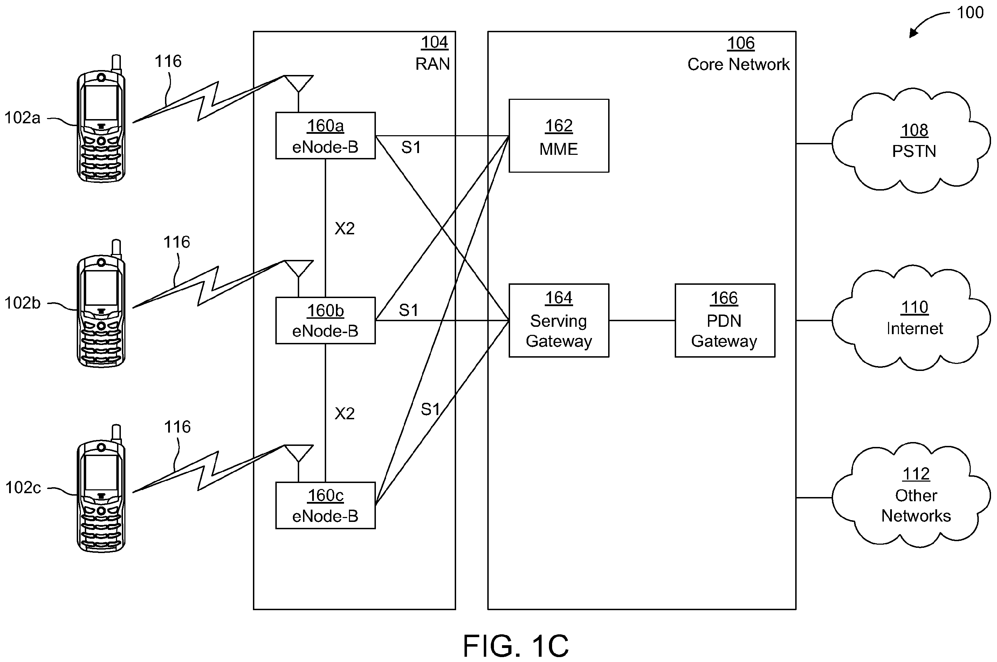

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (PGW) 166. While the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional landline communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width. The primary channel may be the operating channel of the BSS and may be used by the STAs to establish a connection with the AP. In certain representative embodiments, Carrier Sense Multiple Access with Collision Avoidance (CSMA/CA) may be implemented, for example in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz, and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications (MTC), such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode) transmitting to the AP, all available frequency bands may be considered busy even though a majority of the available frequency bands remains idle.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

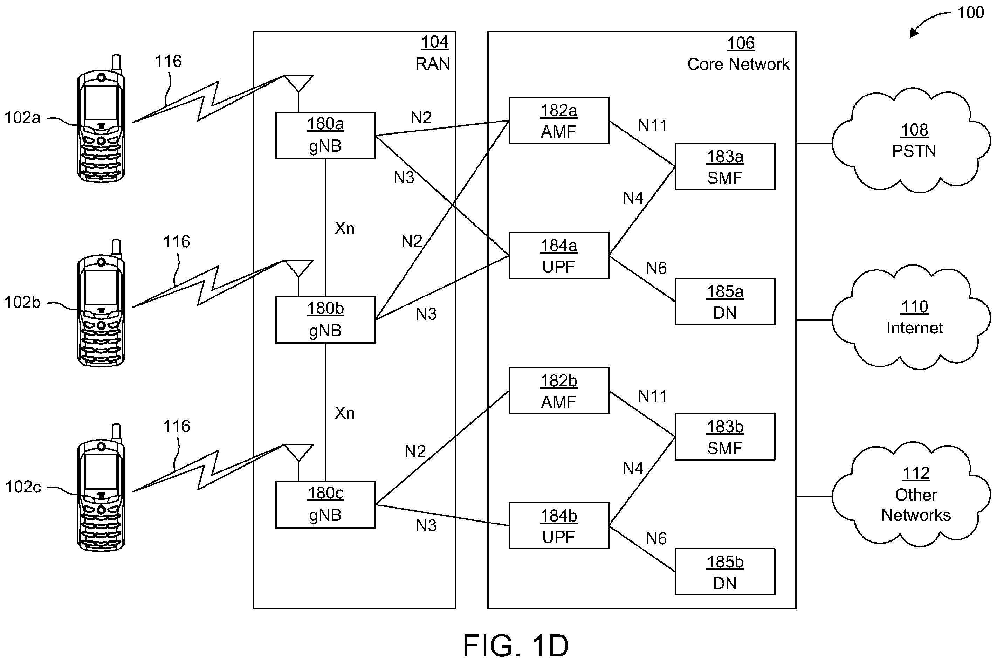

FIG. 1D is a system diagram illustrating the RAN 104 and the CN 106 according to an embodiment. As noted above, the RAN 104 may employ an NR radio technology to communicate with the WTRUs 102a, 102b, 102c over the air interface 116. The RAN 104 may also be in communication with the CN 106.

The RAN 104 may include gNBs 180a, 180b, 180c, though it will be appreciated that the RAN 104 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTls) of various or scalable lengths (e.g., containing a varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, DC, interworking between NR and E-UTRA, routing of user plane data towards user plane function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 106 shown in FIG. 1D may include at least one AMF 182a, 182b, at least one UPF 184a,184b, at least one Session Management Function (SMF) 183a, 183b, and possibly a Data Network (DN) 185a, 185b. While the foregoing elements are depicted as part of the CN 106, it will be appreciated that any of these elements may be owned and/or operated by an entity other than the CN operator.

The AMF 182a, 182b may be connected to one or more of the gNBs 180a, 180b, 180c in the RAN 104 via an N2 interface and may serve as a control node. For example, the AMF 182a, 182b may be responsible for authenticating users of the WTRUs 102a, 102b, 102c, support for network slicing (e.g., handling of different protocol data unit (PDU) sessions with different requirements), selecting a particular SMF 183a, 183b, management of the registration area, termination of non-access stratum (NAS) signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for MTC access, and the like. The AMF 182a, 182b may provide a control plane function for switching between the RAN 104 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 106 via an N11 interface. The SMF 183a, 183b may also be connected to a UPF 184a, 184b in the CN 106 via an N4 interface. The SMF 183a, 183b may select and control the UPF 184a, 184b and configure the routing of traffic through the UPF 184a, 184b. The SMF 183a, 183b may perform other functions, such as managing and allocating WTRU IP address, managing PDU sessions, controlling policy enforcement and QoS, providing DL data notifications, and the like. A PDU session type may be IP-based, non-IP based, Ethernet-based, and the like.

The UPF 184a, 184b may be connected to one or more of the gNBs 180a, 180b, 180c in the RAN 104 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering DL packets, providing mobility anchoring, and the like.

The CN 106 may facilitate communications with other networks. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local DN 185a, 185b through the UPF 184a, 184b via the N3 interface to the UPF 184a, 184b and an N6 interface between the UPF 184a, 184b and the DN 185a, 185b.

In view of FIGs. 1A-1D, and the corresponding description of FIGs. 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

Delivery mode switching between unicast and multicast/broadcast is described. A WTRU may move from a RAN node that supports multimedia broadcast/multicast service (MBMS) session to one that does not support MBMS session, or vice versa. In order to avoid duplicated packet transmission, the unicast delivery mode may be deactivated when the WTRU decides to use a multicast/broadcast session. When the multicast/broadcast session is not available, the WTRU may re-activate the unicast delivery mode for MBMS. For example, the PDU session for unicast delivery mode deactivation may be released and the PDU session for unicast delivery mode reactivation may be re-established. Such activity may necessitate additional signaling between WTRU and the network for PDU session establishment/release and all other services running in the PDU session may be interrupted.

MBMS is a point-to-multipoint service in which data is transmitted from a single source entity to multiple recipients. Transmitting the same data to multiple recipients allows network resources to be shared.

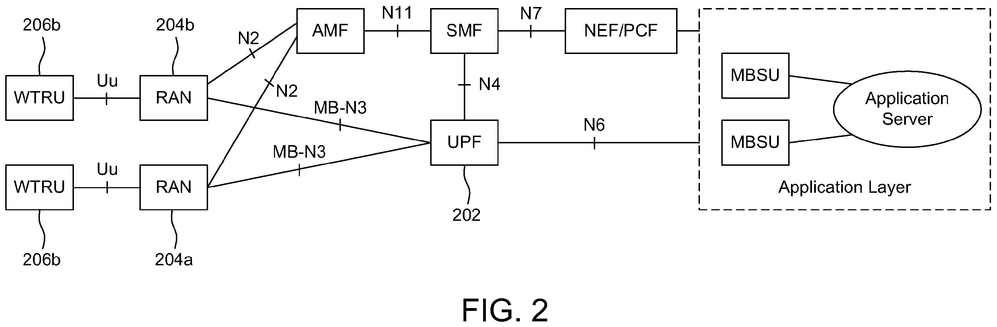

FIG. 2 illustrates MBMS architecture. As shown in FIG. 2, MBMS packets are delivered from a UPF 202 to a one or more RANs 204a and 204b via a multicast bearer in MB-N3 interface. Then, the MBMS packets are delivered from RAN 204a and RAN 204b to WTRU 206a and WTRU 206b via multicast or unicast radio bearer in Uu interface.

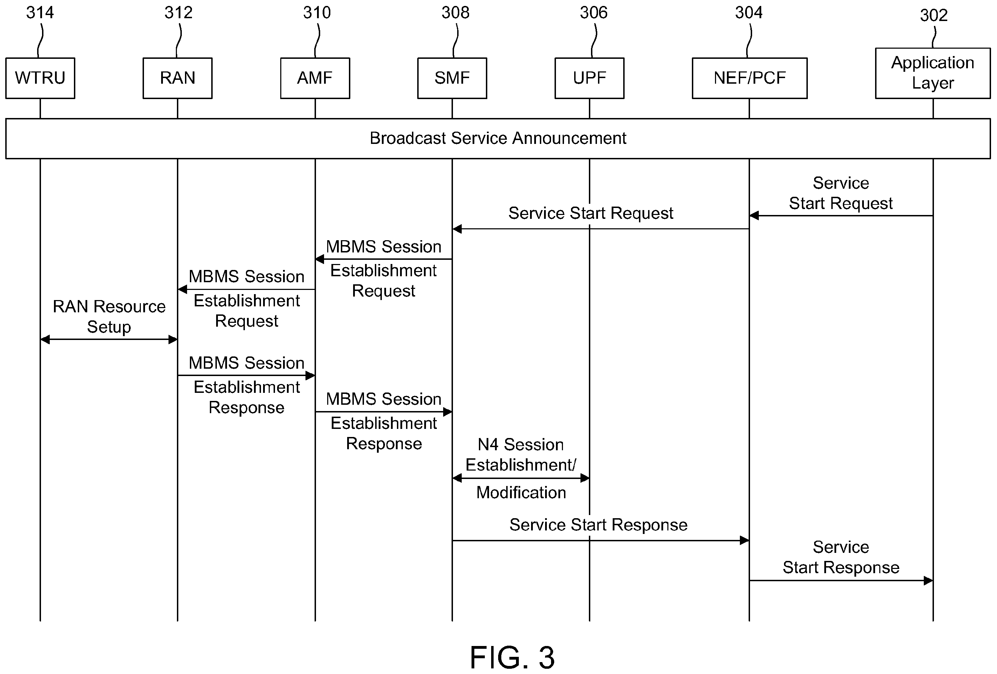

FIG. 3 illustrates a signal diagram to establish a broadcast session. An application layer 302 may provide broadcast information (e.g., service area, QoS) to a SMF 308 (via network exposure function (NEF) or policy control function (PCF)). The SMF 308 may select a RAN 312 based on the broadcast service area and establishes a broadcast bearer between a UPF 306 and selected RAN 312 on a MB-N3 interface. The UPF 306 may forward broadcast packets received from the application layer 302 to the RAN 312 in a broadcast session. The RAN 312 may use radio bearers to deliver broadcast packets to the WTRU 314.

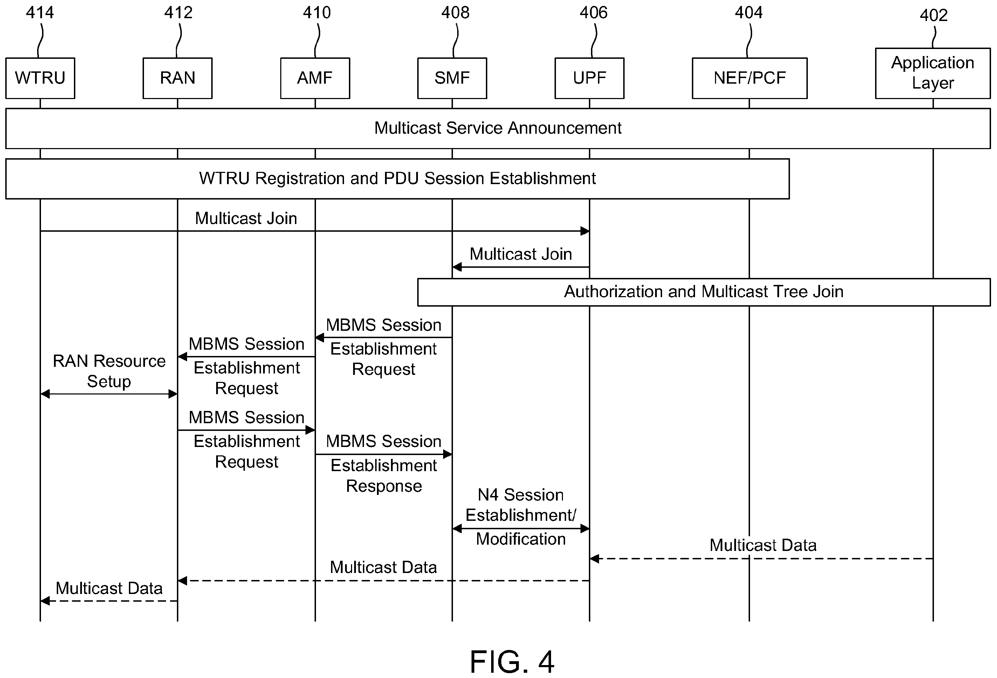

FIG. 4 illustrates a signal diagram to establish a multicast session. The WTRU 414 may send a multicast join message to the SMF 408 (via the UPF 406), which indicates the multicast group to be joined (e.g., a multicast IP address). After an authorization procedure, the SMF 408 may establish or modify a multicast session between the UPF 406 and the RAN 412. The UPF 406 may forward multicast packets received from the application layer 402 to the RAN 412 in multicast session. The RAN 412 may use radio bearers to deliver broadcast packets to the WTRU 414.

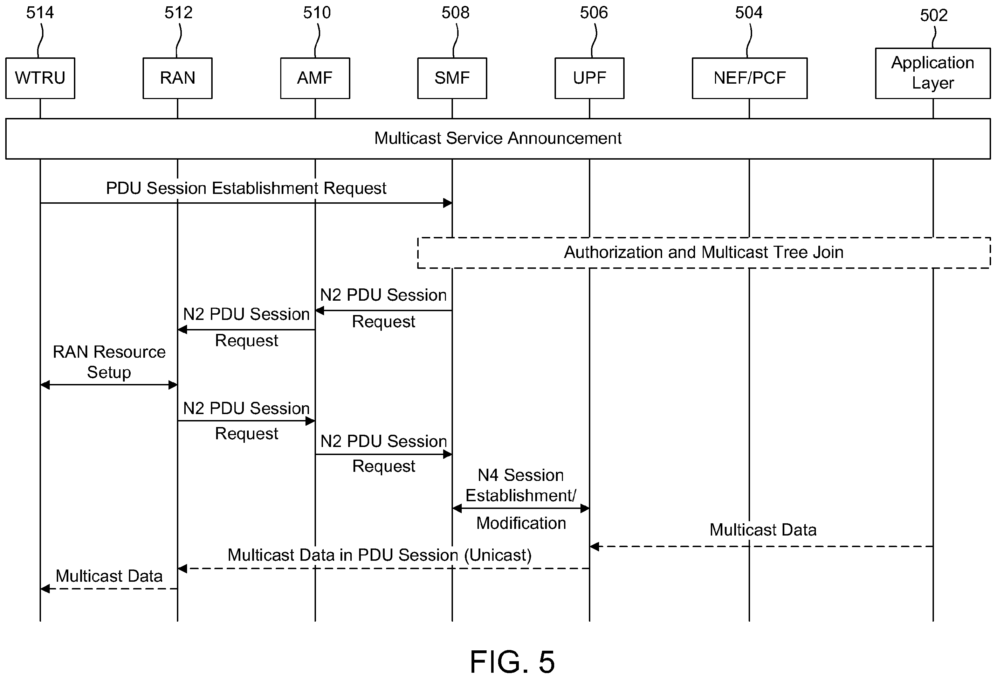

FIG. 5 illustrates a signal diagram for a unicast delivery mode for MBMS. Using broadcast/multicast delivery mode (broadcast session or multicast session) for MBMS may provide a savings for the network transmission resource. Considering network condition (e.g., RAN does not support MBMS session in certain areas), the network may allow the MBMS to be delivered by unicast mode.

As illustrated in FIG. 5, in unicast delivery mode, the WTRU 514 may establish a PDU session for MBMS. The network may decide that the PDU session is used for MBMS in unicast delivery mode based on the WTRU's 514 request, e.g., a specific DNN in the PDU session establishment request. After the PDU session is established, the UPF 506 may forward MBMS packets received from the application layer 502 to the RAN 412 in the PDU session (unicast). The RAN 512 may use unicast radio bearers to deliver MBMS packets to the WTRU 514.

According to an embodiment, a WTRU-initiated suspending of unicast delivery mode may overcome the described deficiency (i.e., additional signaling between the WTRU and the network for PDU session establishment/release). In one embodiment, when the WTRU decides to deactivate unicast delivery mode for MBMS, the WTRU sends a PDU session suspending indication to the SMF. The WTRU may send MBMS information with the suspend indication to indicate which MBMS bearers/flow/session are to be suspended. After receiving a suspended indication, the SMF notifies the UPF to discard the packet corresponding to the MBMS.

When the WTRU decides to reactivate unicast delivery mode for MBMS, the WTRU sends a PDU session resuming indication to the SMF. The WTRU may send MBMS information with the resume indication to indicate which MBMS session is to be resumed. After receiving a resuming indication, the SMF notifies the UPF to stop discarding the packet corresponding to the MBMS.

The suspending/resuming indication may be used without MBMS information, to indicate suspending all service in the PDU session. The MBMS information may be an IP filter (e.g., source/target IP address), a multicast IP address, etc.

According to this embodiment, the WTRU may decide to deactivate unicast delivery mode for MBMS, e.g., receiving indication from application, or moving to an area which supports multicast/broadcast delivery mode. The WTRU may send a PDU session suspending indication in a session management NAS message, e.g., PDU session modification to the SMF, which may be sent together with MBMS information as described above (e.g., IP Filter) and the PDU session suspending indication may also be sent to the AMF via Mobility Management NAS message, e.g., service request, and AMF sends the PDU session suspending indication to the SMF. The WTRU may decide to reactivate unicast delivery mode for MBMS, such as receiving indication from application layer, or moving to an area which does not support multicast/broadcast delivery mode, for example. The WTRU sends a PDU session resuming indication, such as in a PDU Session modification message to the SMF, which may be sent together with MBMS information. The PDU session resuming indication may also be sent to the AMF via Mobility Management NAS message, e.g., service request, and AMF sends the PDU session suspending indication to the SMF.

According to this embodiment, the SMF may receive a PDU session suspend indication from the WTRU, which may be received together with MBMS information. The SMF may notify the UPF to discard the packet corresponding to the MBMS in the PDU session. If no MBMS information is received, the SMF may notify the UPF to discard packets corresponding to all service in the PDU session. The SMF may deactivate the user plane if all packets in the PDU session are to be discarded. The SMF may receive a PDU session resuming indication from the WTRU, which may be received together with MBMS information. The SMF may notify the UPF to stop discarding the packet corresponding to the MBMS in the PDU session. If no MBMS information is received, the SMF may notify the UPF to stop discarding packets corresponding to all service in the PDU session.

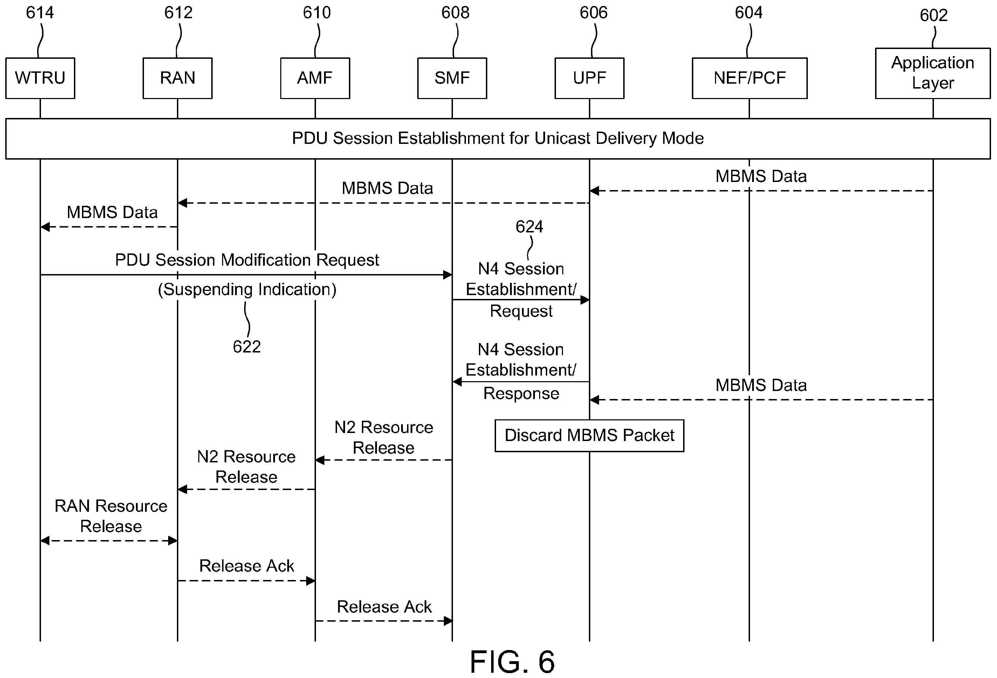

FIG. 6 illustrates a signal diagram for the WTRU-initiated PDU session suspending procedure. The WTRU 614 may establish a PDU session for unicast delivery mode. When the WTRU 614 decides to de-activate unicast delivery mode (e.g., moving to an area which supports multicast/broadcast delivery mode), the WTRU 614 may send a PDU session modification request 622 to the SMF 608. The PDU session modification request 622 may include one or more of suspending indication and MBMS information. The SMF 608 may send an N4 session modification request 624 to the UPF 606, which may include one or more of suspending indication and MBMS information at step 2. The UPF may then send a N4 session modification response 624 to the SMF 608. The UPF 606 may discard received data or MBMS data corresponding to the MBMS information. Next, as shown in FIG. 6, the SMF may trigger user plane deactivation procedure if all packets are to be discarded.

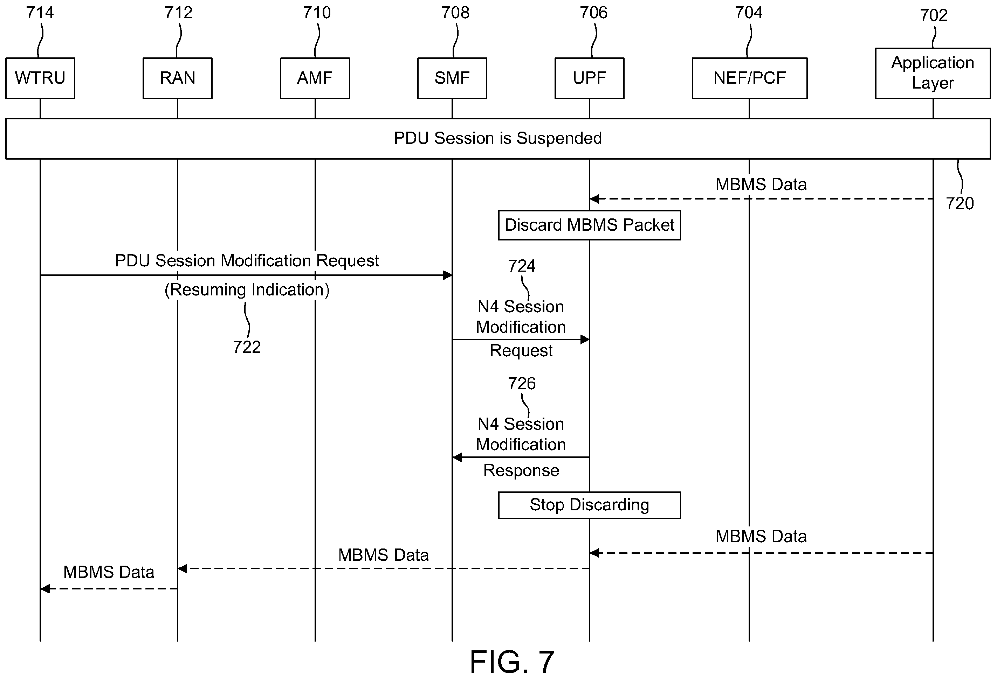

FIG. 7 illustrates a signal diagram for the WTRU-initiated PDU session resuming procedure. At 720, the PDU session may be suspended by the suspending procedure as shown in FIG. 6. When the WTRU 714 decides to re-activate unicast delivery mode, e.g., moving to an area which does not support multicast/broadcast delivery mode, the WTRU 714 may send a PDU session modification request 722, which may include one or more of resuming indication and MBMS information. The SMF 708 may send a N4 session modification request 724 to the UPF 706, which includes one or more of resuming indication and MBMS information at step 2. The UPF 706 may send a N4 session modification response 726 to the SMF 708. The UPF 706 stops discarding all received data or MBMS data corresponding to the MBMS information.

According to an embodiment, a network-initiated suspending of unicast delivery mode may occur. The SMF may decides to deactivate unicast delivery mode for MBMS based on multicast session establishment for the WTRU or the WTRU's moving into a broadcast area. The SMF may notify the UPF to discard the packet corresponding to the MBMS. When the multicast session establishment is released or the WTRU moves out of the broadcast area, the SMF may notify the UPF to stop discarding the packet corresponding to the MBMS.

The SMF may notify the WTRU about the PDU session suspending/resuming. The SMF may decide MBMS information (i.e., packets to be discarded) based on the multicast session context or the WTRU's location. The SMF may decide to deactivate/reactivate unicast delivery mode based on criteria received from AF(application layer), e.g., an area with a user number threshold (if the number of MBMS users exceeds the threshold, multicast/broadcast delivery mode may be used).

According to this embodiment, the SMF may establish multicast session for the WTRU or detect that the WTRU moves into a broadcast area. The SMF may decide to deactivate unicast delivery mode for MBMS for the WTRU. The SMF may notify the UPF to discard the packet corresponding to the MBMS in the PDU session. The SMF may notify the WTRU about the PDU session suspending. The SMF may release multicast session for the WTRU or detect that the WTRU moves out of a broadcast area. The SMF may decide to reactivate unicast delivery mode for MBMS for the WTRU. The SMF may notify the UPF to stop discarding the packet corresponding to the MBMS in the PDU session. The SMF may notify the WTRU about the PDU session resuming.

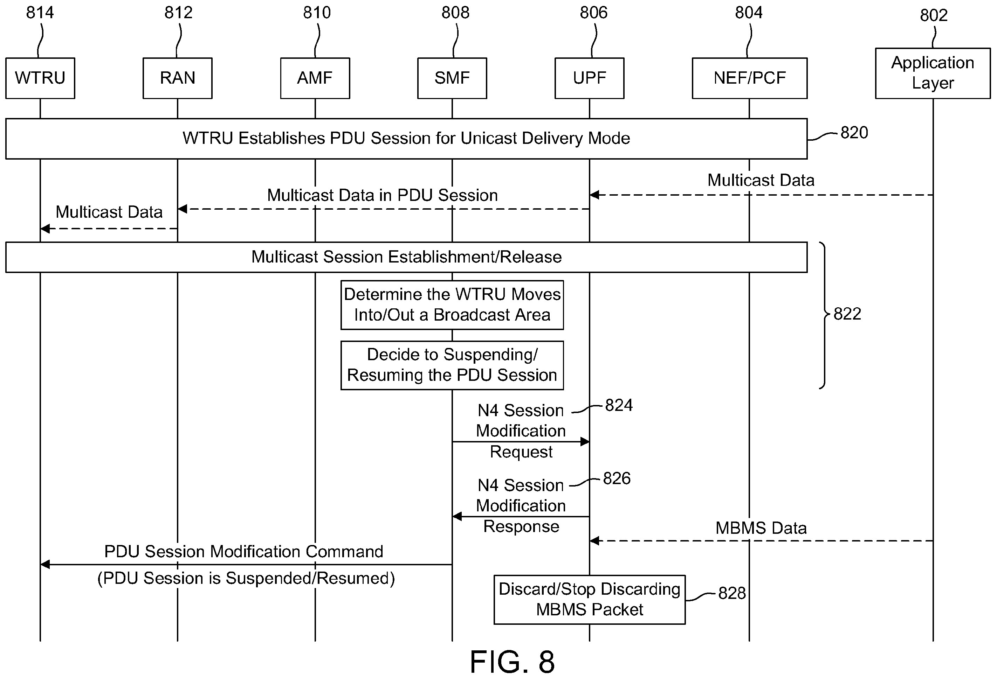

FIG. 8 illustrates a signal diagram for the network-initiated suspending/resuming of unicast delivery mode. At 820, the PDU session may be established for unicast delivery mode. At 822, the SMF 808 may decide to suspend or resume the PDU session based on the multicast session establishment or release, or based on the WTRU move into/out a broadcast area, or based on criteria received from AF (application layer). At step 2, the SMF 808 may send a N4 session modification request 824 to the UPF 806, which includes one or more of suspending or resuming indication and MBMS information. The UPF 806 may send a N4 session modification response 826 to the SMF. At 828, the UPF discards or stops discarding all received data or MBMS data corresponding to the MBMS information.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

### Itemized list of examples:

Example 1 is a method for suspending reception of a multimedia broadcast multicast service (MBMS), the method comprising: receiving a MBMS data stream in a unicast delivery mode; determining to deactivate the unicast delivery mode; and transmitting a session management non-access stratum (NAS) message to a session management function (SMF); wherein the session management session NAS message includes a suspend indication. Example 2 is the method of example 1, wherein the method is performed by a wireless transmit/receive unit (WTRU). Example 3 is the method of example 1, further comprising receiving a radio access network (RAN) resource release message in response to the session management NAS message. Example 4 is the method of example 1, further comprising receiving a protocol data unit (PDU) session modification command from the SMF. Example 5 is the method of example 1, further comprising transmitting multimedia broadcast/multicast service (MBMS) information with the NAS message to the SMF. Example 6 is the method for suspending reception of a multimedia broadcast multicast service (MBMS), the method comprising: deciding to suspend a protocol data unit (PDU) session; transmitting a N4 session modification request to a user plan function (UPF); receiving a N4 modification response from the UPF; and notifying the UPF to discard a MBMS packet during the PDU session. Example 7 is the method of example 6, wherein the method is performed by a session management function (SMF). Example 8 is the method of example 6, further comprising deciding to suspend the PDU session based on a PDU session modification request from a wireless transmit/receive unit (WTRU). Example 9 is the method of example 6, further comprising deciding to suspend the PDU session based on a location of the WTRU. Example 10 is a wireless transmit/receive unit (WTRU) comprising: a receiver configured to receive a multimedia broadcast multicast service (MBMS) data stream in a unicast delivery mode; a processor configured to determine to deactivate the unicast delivery mode; and a transmitter configured to transmit a session management non-access stratum (NAS) message to a session management function (SMF). Example 11 is the WTRU of example 10, further comprising receiving a radio access network (RAN) resource release message in response to the session management NAS message. Example 12 is the WTRU of example 10, further comprising receiving a protocol data unit (PDU) session modification command from the SMF. Example 13 is the WTRU of example 10, further comprising transmitting multimedia broadcast/multicast service (MBMS) information with the NAS message to the SMF.

## Claims

1. A method performed by a wireless transmit/receive unit, WTRU, for controlling delivery of a multimedia broadcast/multicast service, MBMS, data stream, the method comprising:
receiving the MBMS data stream using a protocol data unit, PDU, session in a unicast delivery mode;
determining to suspend the unicast delivery mode for the MBMS data stream; and
transmitting, to a session management function, SMF, a session management non-access stratum, NAS, message comprising a suspend indication associated with the PDU session and MBMS information identifying the MBMS data stream;
wherein the suspend indication indicates that unicast delivery of the MBMS data stream identified by the MBMS information is to be suspended over the PDU session.

2. The method of claim 1, wherein the session management NAS message is a PDU session modification request.

3. The method of claim 1 or 2, wherein the MBMS information comprises at least one of an IP filter, a source IP address, a target IP address, or a multicast IP address.

4. The method of any one of claims 1, 2, or 3, wherein determining to suspend the unicast delivery mode is based on receiving an indication from an application layer.

5. The method of any one of claims 1, 2, 3, or 4, wherein determining to suspend the unicast delivery mode is based on determining that the WTRU has moved to an area that supports a multicast delivery mode or a broadcast delivery mode for the MBMS data stream.

6. The method of any one of claims 1, 2, 3, 4, or 5, further comprising:
receiving, in response to transmitting the session management NAS message, at least one of a radio access network, RAN, resource release message or a PDU session modification command indicating that the PDU session is suspended.

7. The method of any one of claims 1, 2, 3, 4, 5, or 6, further comprising:
determining to resume the unicast delivery mode for the MBMS data stream; and
transmitting, to the SMF, a second session management NAS message comprising a resume indication and MBMS information identifying the MBMS data stream for which suspension of unicast delivery over the PDU session is to be discontinued.

8. A wireless transmit/receive unit, WTRU, comprising:
a transceiver; and
a processor;
wherein the transceiver and the processor are configured to:
receive a multimedia broadcast/multicast service, MBMS, data stream using a protocol data unit, PDU, session in a unicast delivery mode;
determine to suspend the unicast delivery mode for the MBMS data stream; and
transmit, to a session management function, SMF, a session management non-access stratum, NAS, message comprising a suspend indication associated with the PDU session and MBMS information identifying the MBMS data stream,
wherein the suspend indication indicates that unicast delivery of the MBMS data stream identified by the MBMS information is to be suspended over the PDU session.

9. The WTRU of claim 8, wherein the session management NAS message is a PDU session modification request.

10. The WTRU of claim 8 or 9, wherein the MBMS information comprises at least one of an IP filter, a source IP address, a target IP address, or a multicast IP address.

11. The WTRU of any one of claims 8, 9, or 10, wherein the transceiver and the processor are configured to:
determine to suspend the unicast delivery mode based on receiving an indication from an application layer.

12. The WTRU of any one of claims 8, 9, 10, or 11, wherein the transceiver and the processor are configured to:
determine to suspend the unicast delivery mode based on determining that the WTRU has moved to an area that supports a multicast delivery mode or a broadcast delivery mode for the MBMS data stream.

13. The WTRU of any one of claims 8, 9, 10, 11, or 12, wherein the transceiver and the processor are further configured to:
receive, in response to transmission of the session management NAS message, at least one of a radio access network, RAN, resource release message or a PDU session modification command indicating that the PDU session is suspended.

14. The WTRU of any one of claims 8, 9, 10, 11, 12, or 13, wherein the transceiver and the processor are further configured to:
determine to resume the unicast delivery mode for the MBMS data stream; and
transmit, to the SMF, a second session management NAS message comprising a resume indication and MBMS information identifying the MBMS data stream for which suspension of unicast delivery over the PDU session is to be discontinued.

15. The WTRU of any one of claims 8, 9, 10, 11, 12, or 13, wherein the transceiver and the processor are further configured to:
receive the MBMS data stream using a multicast delivery mode or a broadcast delivery mode after transmitting the session management NAS message comprising the suspend indication.
